# EUROPEAN PATENT SPECIFICATION

(11) **EP 1 970 270 B1**
(45) Date of publication and mention of the grant of the patent: **11.08.2010**
(21) Application number: 06847046.7
(22) Date of filing: 15.11.2006
(51) Int. Cl.: B60S 3/00

(54) **MOBILE CLEANING DEVICE**
MOBILE REINIGUNGSVORRICHTUNG
DISPOSITIF MOBILE DE NETTOYAGE

(30) Priority: 16.11.2005 ES 200502515 U
(43) Date of publication of application: 17.09.2008
(73) Proprietor: Biocarwash, S.L., 28230 Las Rozas (ES)
(72) Inventor: AGUDO LÓPEZ, Rodrigo, Marcelino, E-28230 Las Rozas (ES); AZNAR PRADO, Miguel Salvador, 28230 Las Rozas (ES); DURANGO CASTILLO, Javier, 28230 Las Rozas (ES)
(74) Representative: Schäfer, Matthias W.
(86) International application number: PCT/ES2006/000631
(87) International publication number: WO 2007/057489

(56) References cited:
- CN-A- 1 727 233
- DE-U1- 20 311 123
- ES-U- 1 052 389
- ES-U- 1 053 123
- ES-U- 1 053 123
- ES-U- 1 056 279
- ES-U- 1 056 279
- ES-U- 1 060 802
- GB-A- 2 181 705
- GB-A- 2 181 705
- JP-A- 2000 117 203
- JP-A- 2000 117 203

## Description

The present invention relates, as its title indicates, to a mobile cleaning device of the type that can be moved to clean motor cars, motorcycles, etc in the place in which they are parked, characterised in that it comprises a small frame that supports the body in which is housed both an electrical motor that enables the trolley to move in addition to all the equipment required to clean the exterior and interior of motor vehicles, this equipment mainly consisting of a detachable clean water tank, a detachable dirty water tank, one or more electrical batteries, an electrical pump for the water, an electrical converter or inverter, an electronic control module with specific software for controlling cleaning operations, the presence of the operator and their working hours, a hose connected to the electrical pump fitted with an adjustable spray gun, an electrical vacuum cleaner and a adjustable light positioned on the outside of the device's body.

At the moment there are many different and widely known types of devices used for in-situ cleaning of vehicles in car parks, shopping centres and even in the street. Most of them are no more than a simple cleaning trolley that transports a bucket of water and the necessary manual cleaning equipment, the drawback being that the cleaning process requires a lot of manual effort, and there is also the added problem that a lot of water is usually spilled on the floor, this water containing cleaning agents that stain and pollute the surrounding area.

Other solutions have been sought. For example, Spanish Utility Model 200302817, "Cleaning trolley for washing vehicles", discloses a device that has the drawback of not being fitted with lighting or a vacuum-cleaning device for cleaning interiors, which means interiors cannot be cleaned, and it also presents the problem of many manual functions being required. Nor does it have any type of device that allows the number of cleaning operations completed by the operator to be counted or the time spent.

Spanish Utility Model 200201615 "Portable device for washing cars" discloses another type of cleaning trolley with the drawback that it is not disposed with a dirty water tank or lighting or a vacuum cleaner, which greatly reduces its usage possibilities. It also presents an additional problem in that it is not designed for cleaning interiors.

There also known units, such as the one disclosed in Spanish Utility Model 200301494 "Device for cleaning bodywork and similar areas that may be attached to a mobile trolley for the maintenance of motor cars", that incorporate a pressurised tank to facilitate cleaning, although the pressure must be generated manually by means of a lever, which makes it very tiring to use. Furthermore, it cannot be used by physically handicapped people and it features hardly any cleaning accessories.

Similarly, devices such as the one claimed in Spanish Utility Model 200402065 "Control panel for mobile units for the cleaning of the bodywork and interiors of motor cars" are occasionally used. These devices can function automatically and have an outlet built into them for the connection of a vacuum cleaner, although they do present the drawback of requiring a continuous voltage supply, these type of vacuum cleaners being scarce, expensive, not very powerful and not suitable for intensive use. Furthermore, they present the added problem of not being capable of controlling the cleaning operations performed or counting the time used, and they indicate only the general status of the machine.

GB-A-2 181 705 discloses a vehicle washing apparatus comprising a carriage unit having a tricycle arrangement of wheels with a pair of rear wheels and single front wheel. A platform is mounted on the carriage and this includes a handle enabling the carriage to be drawn forward which handle further includes control means associated with the drive motors. Mounted on the platform is a water tank and an upstanding post of a hollow construction which carries at an upper end an articulated boom which is pivotable about a coupling for horizontal rotation and about a pivot point for vertical movement. An outlet from the tank feeds an electric water pump, the outlet of which feeds via pipe which extends upwardly through the hollow post and thereafter extends from an aperture in the upper end thereof to enter the end of the boom. The pipe passes along the boom and feeds water through a flexible hose to the washing attachment.

Further, ES 1 053 123 U describes another autonomeous cleaning device for automobiles.

In addition to the above-mentioned drawbacks, all the aforementioned cleaning devices present some very common and significant problems, the most important of them being that they can only be moved manually, which makes working with them physically arduous and tiring due to the fact they are very heavy and can weigh up to 80 or 90 kg, thus causing frequent physical problems and occupational illnesses. This means that their use is restricted solely to physically strong people without physical problems or handicaps, thus curtailing employment opportunities for a large section of society.

Another notable problem presented by the aforementioned cleaning devices concerns power supply as those disposed with electrical components in order to make the work easier, such as water pumps or vacuum cleaners, have to power such components directly from a continuous low voltage supplied by batteries, with specially designed components having to be used for this purpose, normally with a high cost, reduced cleaning capabilities and low energy output, thereby producing poor cleaning results and reducing the autonomy of the cleaning device.

In order to solve the problem currently posed by the cleaning of cars in their parking spaces, the mobile cleaning device that is the object of this invention has been designed, the device being a portable unit for cleaning the interior and exterior of all types of vehicles and which may be moved easily alongside the vehicles so that the cleaning services may be performed.

This portable unit consists of a small frame that supports the body including all the equipment required to clean the exterior and interior of vehicles, it being provided with wheels to make it easier to move, the rear wheels preferably having a larger diameter than the front ones to make them easy to move with the slightest force and with the assistance of an internal electrical motor that aids the autonomous movement of the mobile cleaning device at a low speed, preferably around 6 km/h, the operator merely having to guide it using the rear handle. The internal electrical motor is connected to the rear drive wheels by suitable and conventional drive means. The rear handle also has a switch built into it for operating the internal electrical motor, preferably operated by a lever that switches the motor on when it is pressed and automatically switches the motor off when it is released, in its rest position.

A small pole with a rigid flag, of a variable size, projects out of the top part and may be used to provide graphic information on the service being provided, prices, advertising, etc.

The body is also disposed with one or more covers providing access to the internal area, where additional cleaning equipment may be placed on a tray such as cloths, sprays, etc. There is also an access cover at the rear for the maintenance of the electrical and electronic equipment. At the front there is another larger cover providing full access to the interior for filling and emptying the tanks, etc.

The equipment required to clean the exterior and interior of motor vehicles and which are included in the body and supported by the frame are as follows:
- Detachable clean water tank, preferably with a minimum capacity of 40 litres.
- Detachable dirty water tank, preferably with a minimum capacity of 3 litres.
- One or more electrical batteries providing a continuous voltage supply.
- Electrical pump for the water.
- Electrical converter or inverter, which supplies a standardised alternating voltage of 230V from the continuous voltage supplied by the batteries.
- Electronic control module with specific software for controlling cleaning operations, the presence of the operator and their working hours.
- Hose connected to the electrical pump and fitted with an adjustable spray gun and located on the outside of the body, on a support that is easily accessible for the user.
- Electrical vacuum cleaner supplied by an alternating voltage of 230V with a preferred power of 1000 W or above.
- Adjustable light on the outside of the device's body.
- Electrical motor for moving the mobile cleaning device, preferably with a minimum autonomy of 30 km and connected to the rear wheels by suitable and conventional drive means.

The water used to clean the exteriors of the vehicles is extracted from the tank containing the clean water, which is mixed beforehand with the necessary cleaning products. When the spray gun fitted onto the end of the hose is pressed the water comes out automatically. The built-in electrical pump ensures the water comes out of the hose at the necessary pressure, the pump being powered by the battery or batteries providing a continuous voltage supply. This ensures that the water needed to clean the exterior of the vehicle is sprayed very finely, thus preventing the floor from getting wet and ensuring a minimum amount of water is used in cleaning a vehicle, thereby ensuring greater autonomy without the tank having to be filled up.

The dirty water tank collects the dirty water from the cloths after the bodywork of the vehicles is cleaned by hand with special cloths. This tank has a waste pipe for draining off residual water into areas designed for that purpose.

The electrical vacuum cleaner enables the entire interior of the vehicle (seats, carpets, etc) to be vacuum-cleaned autonomously without the need for a mains connection, with high-power and long-lasting vacuum cleaners, which are common on the market, being used. This is made possible by the incorporation of the electrical converter or inverter, which transforms the electricity from the battery, supplied at a continuous voltage, into a standardised alternating voltage of 230V. This enables vacuum cleaners widely available on the market to be plugged into the device as well as industrial vacuum cleaners, thereby enabling special vacuum cleaners to be plugged in for cleaning liquids and especially designed for the intensive cleaning of carpets, thus ensuring the interior of the vehicle can be fully cleaned and disinfected.

The built-in adjustable lamp enables the interior and exterior of the vehicle to be cleaned very easily, compensating for the poor lighting in car parks, especially underground car parks. The lamp is also connected to the converter, which supplies it with the alternating voltage of 230V that ensures it functions efficiently.

Finally, the mobile cleaning device is disposed with an electronic control module that, apart from switching on, switching off, protecting and indicating the various electrical components, is provided with specific software for counting and controlling cleaning operations, thus enabling the number of cleaning operations and the time used by the operator to be monitored along with the operator's working hours.

The mobile cleaning device presented herein provides numerous advantages over the systems that are currently available, the most important of them being that the inclusion of an electrical converter enables the use of both conventional alternating-current vacuum cleaners and industrial vacuum cleaners or special vacuum cleaners for cleaning liquids, as well as standard alternating-current lamps that are more powerful, cheaper and easier to replace than their low-voltage equivalents.

Another notable advantage is its ability to move autonomously thanks to the internal electrical motor, which means that the operator does not have to push it or pull it and merely has to guide it, without any kind of effort, using the rear handle. This, allied to the mechanisation of most of its functions means that it can be used by any person, regardless of their physical condition, it being perfectly suitable for use even by handicapped people.

Another important advantage is that this device enables both the interior and the exterior of the vehicle to be cleaned in their entirety.

Another of the most important advantages of this present invention is that the electronic module and its specific software can control and count all the device's operations, and monitor the operator's working hours.

In order to better understand the object of the present invention, a preferred practical embodiment of a mobile cleaning device is shown in the drawing attached

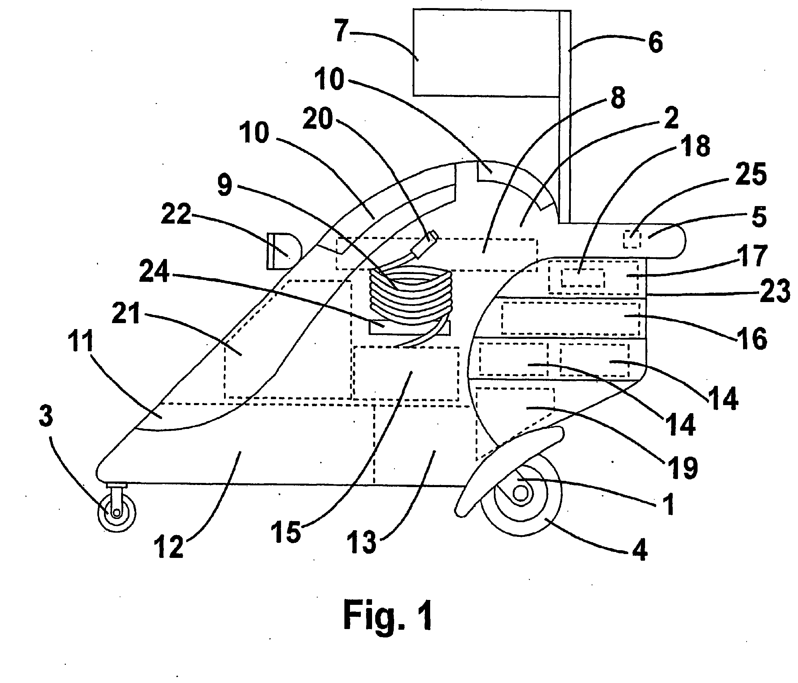

In said drawing Figure 1 shows an example of an embodiment with the constituent parts.

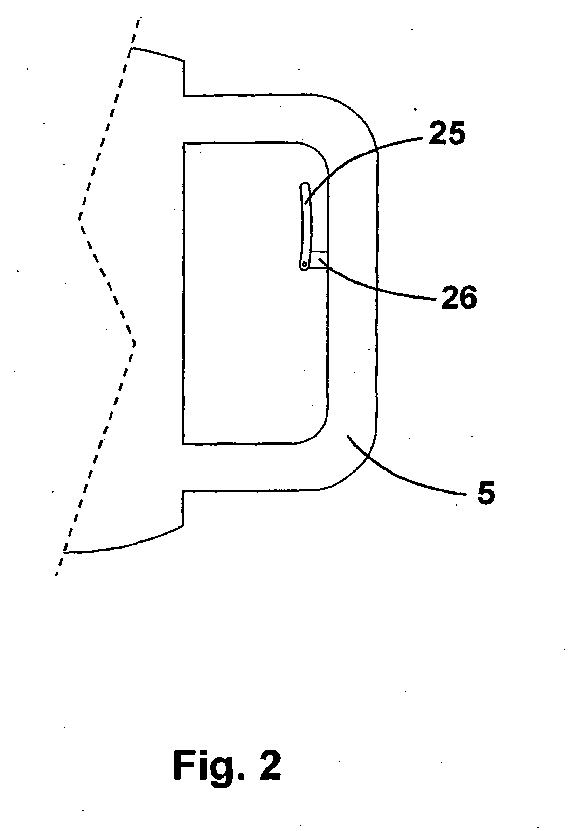

Figure 2 shows a top view of a detail of the rear handle with the motor operating switch and an example of the operating lever for said switch.

The inventive mobile cleaning device is essentially formed, as can be seen in the plan attached, by a small frame (1) that supports the body (2) in which is housed all the equipment required to clean the exterior and interior of motor vehicles, being provided with wheels (3,4) to make it easier to move, the rear wheels (4) preferably having a larger diameter than the front ones (1) and being assisted by an internal electrical motor (19) that aids the autonomous movement of the mobile cleaning device at a low speed, preferably around 6 km/h, the operator merely having to guide it using the rear handle (5). The internal electrical motor (19) is connected to the rear drive wheels (4) by suitable and conventional drive means. The rear handle (5) also has an operating switch (26) built into it for the internal electrical motor (19), preferably operated by a lever (25) that switches the internal electrical motor (19) on when it is pressed and automatically switches the motor off when it is released, in its rest position. The internal electrical motor (19) is connected to the rear drive wheels (4) by suitable and conventional drive means. A small pole (6) with a flag (7) preferably rigid and of a variable size, projects out of the top part and may be used to provide graphic information on the service being provided, prices, advertising, etc.

The body (2) is disposed with one or more covers (10) providing access to the internal area, where additional cleaning equipment may be placed on a tray (8) such as cloths, sprays, etc. There is also an access cover (23) at the rear for the maintenance of the electrical and electronic equipment also situated at the rear. At the front there is a larger, third cover (11) providing full access to the interior for filling and emptying the tanks, etc.

The equipment required to clean the exterior and interior of motor vehicles and which are included in the body (2) and supported by the frame (1) are as follows:
- Detachable clean water tank (12)
- Detachable dirty water tank (13)
- One or more electrical batteries (14) providing a continuous voltage supply.
- Electrical pump (15) for the water.
- Electrical converter or inverter (16), which supplies an alternating voltage of 230V from the continuous voltage supplied by the batteries.
- Electronic control module (17) with specific software for controlling cleaning operations, the presence of the operator and their working hours.
- Hose (9), situated on a support (24) located on the outside of the body (2), connected to the electrical pump (15) and fitted with an adjustable spray gun (20).
- Electrical vacuum cleaner (21) supplied by a standardised alternating voltage of 230V, with a preferred power of 1000 W or above.
- Adjustable light (22) on the outside of the device's body.
- Electrical motor (19) connected to the rear drive wheels (4) by suitable and conventional drive means, and with an operating switch (26) situated on the rear handle (5) and preferably operated by a lever (25) .

The water used to clean the exteriors of the vehicles is extracted from the detachable tank (12) containing the clean water, which is mixed beforehand with the necessary cleaning products. When the spray gun (20) fitted onto the end of the hose (9) is pressed the water comes out automatically. The built-in electrical pump (15) ensures the water comes out of the hose (9) at the necessary pressure, the pump being powered by the battery or batteries (14) providing a continuous voltage supply. The dirty water tank (13) collects the dirty water from the cloths after the bodywork of the vehicles is cleaned by hand with special cloths. This tank (13) has a waste pipe for draining off residual water into areas designed for that purpose.

The electrical vacuum cleaner (21) enables the entire interior of the vehicle (seats, carpets, etc) to be vacuum-cleaned autonomously without the need for a mains connection, with high-power and long-lasting vacuum cleaners, which are common on the market, being used. This is made possible by the incorporation of the electrical converter or inverter (16) which transforms the electricity from the battery or batteries (14) supplied at a continuous voltage into an alternating voltage of 230V, which enables any vacuum cleaner (21) widely available on the market to be plugged into the device as well as industrial vacuum cleaners and special vacuum cleaners for cleaning liquids.

The built-in adjustable lamp (22) enables the interior and exterior of the vehicle to be cleaned very easily, compensating for the poor lighting in car parks, especially underground car parks. This adjustable lamp (22) is also connected to the electrical converter or inverter (16), which supplies it with the alternating voltage of 230V that ensures it functions efficiently.

Finally, the mobile cleaning device is disposed with an electronic control module (17) that, apart from switching on, switching off, protecting and indicating the various electrical components, is provided with specific software (18) for counting and controlling cleaning operations, thus enabling the number of cleaning operations and the time used by the operator to be monitored along with the operator's working hours.

It was decided to omit a detailed description of the other particular features of the device being disclosed or of the components forming part of it, as it was felt that the rest of said particular features are not the object of any claims.

Having described the nature of the present invention in sufficient detail, in addition to a means for putting it into practice, all that remains to be added is that its description is not restrictive, and that variations both in materials and forms and sizes can be made provided that said variations do not alter the essential nature of the characteristics claimed below.

## Claims

1. Mobile cleaning device of the type that can be moved to clean motor cars, motorcycles and other types of vehicles in the place in which they are parked, comprising a frame (1) that supports the body (2) in which is housed both an electrical motor (19) that enables the trolley to move, in addition to all the equipment required to clean the exterior and interior of motor vehicles, being provided with wheels (3,4) to make it easier to move the rear wheels (4) preferably having a larger diameter than the front ones (3) and being mechanically connected to the internal electrical motor (19), and also being disposed with a rear handle (5) provided with an operating switch (26), preferably operated by a lever (25), for the internal electrical motor (19), the equipment required to clean the exterior and interior of motor vehicles and included in the inside of the body (2) and supported by the frame (1) being a detachable clean water tank (12), a detachable dirty water tank (13), one or more electrical batteries (14) providing a continuous voltage, an electrical pump (15) for the water, an electrical converter or inverter (16), an electronic control module (17) with specific software, an electrical vacuum cleaner (21), wherein the equipment required to clean the exterior and interior of motor vehicles and which are included on the outside of the body (2) are a hose (9), situated on a support (24), connected to the electrical pump (15) and fitted with an adjustable spray gun (20), and an adjustable light (22).

2. Mobile cleaning device according to claim 1, wherein the body (2) is also disposed with one or more covers (10) providing access to the internal area, where additional cleaning equipment may be kept on a tray (8) such as cloths, sprays, etc, with there also being another access cover (23) at the rear for the maintenance of the electrical and electronic equipment situated at the rear, with another larger cover (11) being situated at the front and providing full access to the interior for filling and emptying the tanks and other maintenance operations.

3. Mobile cleaning device according to the preceding claims, wherein the clean water, mixed beforehand with the necessary cleaning products, is automatically extracted from the detachable clean water tank (12) when the spray gun (20) on the end of the hose (9) is pressed, the necessary pressure being obtained thanks to the built-in electrical pump (15), which is powered by the battery or batteries (14) providing a continuous voltage supply.

4. Mobile cleaning device according to the preceding claims, wherein the dirty water tank (13) that collects the dirty water from the cloths, after the bodywork of the vehicles is cleaned by hand with special cloths, has a waste pipe for draining off residual water into areas designed for that purpose.

5. Mobile cleaning device according to the preceding claims, wherein the electrical converter or inverter (16) transforms the electricity from the battery or batteries (14) from a continuous voltage to an alternating voltage, preferably standardised at 230V, enabling the use of any alternating-current vacuum cleaner (21) and also an alternating-current adjustable lamp (22).

6. Mobile cleaning device according to the preceding claims, wherein the electronic control module (17), which, apart from the functions of switching on, switching off, protecting and indicating the various electrical components, including the internal electrical motor (19) providing movement, is disposed with specific software (18) for counting and controlling cleaning operations, thereby monitoring the number of cleaning operations and the time used by the operator on each one, as well as their presence and working hours.

## Patentansprüche

1. Mobiles Reinigungsgerät von der Art, das bewegt werden kann, um Automobile, Motorräder und andere Fahrzeugarten an dem Ort, an dem sie parken zu säubern, bestehend aus einem Rahmen (1), der den Körper (2) trägt, in dem ein Elektromotor aufgenommen ist, der die Bewegung des Wagens ermöglicht, zusätzlich zu all der Ausrüstung, die benötigt wird, um das Äußere und das Innere von motorisierten Fahrzeugen zu säubern, mit Rädern (3, 4), um das Bewegen zu erleichtern, wobei die hinteren Räder (4) vorzugsweise einen größeren Durchmesser haben als die vorderen (3) und mechanisch mit dem innenseitigen Elektromotor (19) verbunden sind, und außerdem über einen rückseitigen Griff (5) verfügt, der über einen Betriebsschalter (26), vorzugsweise über einen Hebel (25) betätigbar, für den innenseitigen Elektromotor (19) verfügt, wobei die Ausrüstung, die benötigt wird, um das Äußere und das Innere von motorisierten Fahrzeugen zu säubern und die innerhalb des Körpers (2) untergebracht und vom Rahmen (1) getragen ist, ein abnehmbarer Tank für sauberes Wasser (12), ein abnehmbarer Schmutzwassertank (13), eine oder mehrere elektrische Batterien (14), die Gleichspannung bereitstellen, eine elektrische Pumpe (15) für Wasser, ein elektrischer Konverter oder Inverter (16), ein elektrisches Regelungsmodul (17) mit spezieller Software, ein elektrischer Staubsauger (21) ist, wobei die Ausrüstung, die benötigt wird, um das Äußere und das Innere von motorisierten Fahrzeugen zu säubern und die auf die außenseitige am Körper (2) untergebracht ist, ein Schlauch (9), angebracht an einer Halterung (24), die mit der elektrischen Pumpe (15) verbunden und mit einer verstellbaren Sprühpistole (20) ausgerüstet ist, und ein verstellbares Licht (22) ist.

2. Mobiles Reinigungsgerät nach Anspruch 1, bei dem der Körper (2) zudem über eine oder mehrere Abdeckungen (10) verfügt, die Zugang zu dem Innenraum ermöglichen, wo zusätzliche Reinigungsausrüstung in einer Ablage (8) aufbewahrt werden kann, wie Lappen, Sprays, etc., mit einer weitren Zugangsabdeckung (23) an der Rückseite für die Wartung der elektrischen und elektronischen Ausrüstung, die im, Heck untergebracht ist, mit einer weiteren größeren Abdeckung (11), die an der Frontseite angeordnet ist und die vollen Zugriff auf das Innere ermöglicht, um die Tanks zu befüllen oder zu entleeren, und für andere Wartungsarbeiten.

3. Mobiles Reinigungsgerät nach den vorhergehenden Ansprüchen, wobei sauberes Wasser, das vorher mit dem den nötigen Reinigungsmitteln vermischt wurde, automatisch aus dem abnehmbaren Tank für sauberes Wasser (12) entnommen wird, wenn die Sprühpistole (20) am Ende des Schlauchs (9) betätigt wird, wobei der nötige Druck durch eine eingebaute elektrische Pumpe (15) erzeugt wird, die von der Batterie oder den Batterien (14) gespeist wird, die Gleichstrom liefern.

4. Mobiles Reinigungsgerät nach den vorhergehenden Ansprüchen, wobei der Schmutzwassertank (13), der das verschmutzte Wasser von den Tüchern sammelt, nachdem die Karosserie des Fahrzeugs von Hand mit speziellen Tüchern gesäubert wurde, ein Abflussrohr zum Ableiten von Restwasser in spezielle Bereiche, die für diesen Zweck entworfen wurden, aufweist.

5. Mobiles Reinigungsgerät nach einem der vorhergehenden Ansprüche, wobei der elektrische Konverter oder Inverter (16) die Elektrizität der Batterie oder Batterien (14) von einer Gleichspannung in eine Wechselspannung umwandelt, vorzugsweise standardisiert auf 230V, was die Verwendung eines jeden Wechselstrom Staubsaugers (21) und ebenso einer verstellbaren Wechselstromlampe (22) ermöglicht.

6. Mobiles Reinigungsgerät nach einem der vorhergehenden Ansprüche, wobei das elektrische Regelungsmodul (17), das neben den Funktionen des Einschaltens, des Ausschaltens, dem Schützen und Anzeigen der verschiedenen elektrischen Komponenten einschließlich des innenseitigen Elektromotors (19) beinhaltet, der für die Bewegung sorgt, verfügt über spezielle Software (18) für das Zählen und Steuern von Reinigungsvorgängen, wodurch die Anzahl der Reinigungsvorgänge und die Zeit, die von jeden Bedienenden dabei aufgewendet wird, sowie die Anwesenheit und Arbeitszeit, überwacht wird.

## Revendications

1. Un dispositif mobile de nettoyage du type de ceux qui peuvent être déplacés pour nettoyer des voitures, des motos et d'autres véhicules à l'endroit où ceux-ci sont garés, comprenant un cadre (1) qui soutient le corps (2) dans lequel sont logés un moteur électrique (19) permettant au chariot de se déplacer ainsi que tous les équipement destinés à nettoyer l'extérieur et l'intérieur de véhicules à moteur, équipé de roues (3, 4) rendant le déplacement plus aisé, les roues arrières (4) présentant, de préférence, un diamètre plus grand que les roues avant (3) et étant mécaniquement connectées au moteur électrique interne (19), et disposant en outre d'une poignée arrière (5) équipée d'un interrupteur d'opération (26), actionné, de préférence, par un levier (25) pour le moteur électrique interne (19) où l'équipement nécessaire pour nettoyer l'extérieur et l'intérieur de véhicules à moteur logé dans le corps (2) et soutenu par le cadre (1) est composé d'un réservoir d'eau propre détachable (12), d'un réservoir d'eau sale détachable (13), d'une ou de plusieurs batteries électriques (14) fournissant un courant continu, d'une pompe électrique (15) pour l'eau, d'un convertisseur ou d'un inverseur électrique (16), d'un module de contrôle électronique (17) équipé d'un logiciel spécial, d'un aspirateur électrique (21), et où l'équipement nécessaire pour nettoyer l'extérieur et l'intérieur de véhicules à moteur placé sur l'extérieur du corps (2) est composé d'un tuyau (9) placé sur un support (24) connecté à la pompe électrique (15) et équipé d'une lance ajustable (20) ainsi que d'une lampe (22) ajustable.

2. Un dispositif mobile de nettoyage selon la Revendication 1 où le corps (2) est également équipé d'un ou de plusieurs couvercles (10) offrant un accès à la zone interne dans laquelle des équipements supplémentaires de nettoyage comme des chiffons, des sprays, etc. peuvent être placés sur une tablette (8) ainsi que d'un autre couvercle d'accès (23) prévu à l'arrière pour la maintenance de l'équipement électrique et électronique situés à l'arrière, et d'un autre couvercle (11) plus grand situé à l'avant et permettant ainsi d'avoir plein accès à l'intérieur pour remplir et vider les réservoir et effectuer les opérations de maintenance.

3. Un dispositif mobile de nettoyage selon les Revendications précédentes où l'eau propre, préalablement mélangée aux produits nettoyants nécessaires, est automatiquement extraite du réservoir détachable d'eau propre (12) lorsque la lance (20) à l'extrémité du tuyau (9) est actionnée, la pression nécessaire étant obtenue grâce à la pompe électrique intégrée (15), qui est actionnée par la batterie ou les batteries (14) fournissant un courant continu.

4. Un dispositif mobile de nettoyage selon les Revendications précédentes où le réservoir d'eau sale (13) qui recueille l'eau sale des chiffons après que la carrosserie des véhicules a été nettoyée à la main avec des chiffons spéciaux, présente un tuyau d'évacuation permettant d'éliminer l'eau résiduelle dans des zones prévues à cet effet.

5. Un dispositif mobile de nettoyage selon les Revendications précédentes où le convertisseur ou l'inverseur électrique (16) transforme le courant continu de la batterie ou des batteries (14) en un courant alternatif, de préférence standardisé à 230 V, permettant ainsi l'utilisation de tout aspirateur (21) fonctionnant sur courant alternatif ainsi que de toute lampe ajustable (22) fonctionnant également sur courant alternatif.

6. Un dispositif mobile de nettoyage selon les Revendications précédentes où le module de contrôle électronique (17), hormis pour les fonctions de mise en marche, d'arrêt, de protection et d'indication des divers composants électriques y compris le moteur électrique interne (19) grâce auquel les déplacements sont possibles, est équipé d'un logiciel spécial (18) destiné à compter et à contrôler les opérations de nettoyage, contrôlant ainsi le nombre d'opérations de nettoyage et le temps utilisé par l'opérateur pour chacune d'entre elles, ainsi que la présence et les heures de travail de l'opérateur.
